# EUROPÄISCHE PATENTSCHRIFT

(11) **EP 1 199 517 B1**
(45) Veröffentlichungstag und Bekanntmachung des Hinweises auf die Patenterteilung: **05.09.2007**
(21) Anmeldenummer: 01114276.7
(22) Anmeldetag: 13.06.2001
(51) Int. Cl.: F23N 1/00

(54) **Gassicherheitsabsperrventil**
Gas shut-off safety valve
Soupape d'arrêt de sécurité de gaz

(30) Priorität: 19.10.2000 DE 10051849
(43) Veröffentlichungstag der Anmeldung: 24.04.2002
(73) Patentinhaber: JCI REGELUNGSTECHNIK GmbH, D-45143 Essen (DE)
(72) Erfinder: Obser, Micheal, 45219 Essen (DE)
(74) Vertreter: Albrecht, Rainer Harald

(56) Entgegenhaltungen:
- DE-A- 4 423 313
- US-A- 1 787 212
- US-A- 3 771 761

## Beschreibung

Die Erfindung betrifft ein Gassicherheitsabsperrventil mit
einem Gehäuse, das eine Durchlassöffnung mit mindestens einem Ventilsitz aufweist,
einem Stellglied mit Hubanker und mindestens einem Ventilkörper,
einem Stellantrieb und
einem verstellbaren Anschlagelement zur Begrenzung einer Hubbewegung des Stellgliedes in Öffnungsrichtung,
wobei der Stellantrieb eine dem Hubanker zugeordnete stromdurchflossene Spule und eine auf das Stellglied in Schließrichtung wirkende Rückstellfeder aufweist.

Ein Gassicherheitsabsperrventil des beschriebenen Aufbaus ist aus DE-C 196 50 445 bekannt. Bei der in Fig. 3 dieser Schrift dargestellten Ausführung weist die Spule einen Spulenkern mit Gewindebohrung auf, in der eine Einstellschraube als Anschlagelement angeordnet ist. Die Einstellschraube ist manuell zur Veränderung des Öffnungshubes verstellbar. An dem Stellglied ist ein weiteres, von einer Zusatzfeder beaufschlagtes Anschlagelement federbeweglich gehalten, das bei einem Öffnungshub an der Einstellschraube anschlägt. Mit unterschiedlichen Erregerströmen der Spule, die auf die Federkräfte, Rückstellfeder und der Zusatzfeder abgestimmt sind, können bei der bekannten Ausführung zwei Öffnungshübe ausgeführt werden. Eine stufenlose Regelung des Öffnungshubes ist nicht möglich. Das ist unbefriedigend.

Dokument US-A-3 771 761 offenbart ein Gassicherheitsabsperrventil nach dem Oberbegriff des Anspruchs 1.

Der Erfindung liegt die Aufgabe zugrunde, ein Gassicherheitsventil anzugeben, das bei einem Stromausfall zuverlässig schließt und im Betrieb eine stufenlose Regelung des Gasdurchsatzes ermöglicht.

Ausgehend von einem Gassicherheitsabsperrventil des eingangs beschriebenen Aufbaus wird die Aufgabe erfindungsgemäß dadurch gelöst, dass der Stellantrieb einen Stellmotor zur stufenlosen oder in diskreten Schritten erfolgenden Verstellung des Anschlagelementes aufweist, der an einen den Gasdurchsatz steuernden Regelkreis anschließbar ist. Der Stellmotor des Stellantriebes und das Stellglied sind mechanisch entkoppelt, so dass bei einer Stromunterbrechung das Stellglied in seine Schließstellung zurückbewegt wird und auf diese Weise eine zuverlässige Absperrung der Durchlassöffnung gewährleistet ist. Die stufenlose Verstellung des Anschlagelementes durch den in einen Regelkreis integrierten Stellmotor ermöglicht eine stufenlose Regelung des Gasdurchsatzes. Die dem Hubanker zugeordnete Spule kann mit einem von dem Öffnungshub unabhängigen, konstanten Erregerstrom betrieben werden. Im Rahmen der Erfindung liegt es auch, den Erregerstrom der Spule hubabhängig zu verändern. Durch eine elektronische Steuerung kann der Erregerstrom der Stellung des Anschlagelementes entsprechend angepasst werden, wobei einem kleinen Stellhub ein geringer Erregerstrom und einem großen Stellhub ein entsprechend größerer Erregerstrom zugeordnet ist.

Für die weitere konstruktive Ausgestaltung der erfindungsgemäßen Lehre bestehen verschiedene Möglichkeiten. Eine bevorzugte Ausführung sieht vor, dass der Stellmotor eine axial bewegliche Motorspindel aufweist, die das Anschlagelement bildet. Im Rahmen der Erfindung liegt es auch, dass die Spule einen Spulenkern mit einer Gewindebohrung aufweist und dass das Anschlagelement aus einer in die Gewindebohrung eingesetzten und von dem Stellmotor angetriebenen Gewindespindel besteht, die axial beweglich an den Stellmotor angekuppelt ist. Eine Abwandlung dieser Ausführung besteht darin, dass die Spule einen Spulenkern aufweist, in dem ein Anschlagelement drehfest und axial beweglich eingesetzt ist, und dass das Anschlagelement eine Gewindebohrung aufweist, die von einer an den Stellmotor angeschlossenen Spindel durchfasst ist. Alle Ausführungen lassen sehr präzise Stellbewegungen des Anschlagelementes zu.

Der Stellantrieb kann ferner einen Messwertaufnehmer zur Ermittlung der Position des Anschlagelementes aufweisen. Die Positionserfassung kann beispielsweise auch dadurch erfolgen, dass die Zahl der Umdrehungen der Spindel oder eines an die Spindel angekoppelten Getriebeelementes drehrichtungsabhängig gezählt wird. Im Hinblick auf eine sehr präzise Regelung des Anschlagelementes kann auch die Verwendung eines Schrittmotors als Stellmotor vorteilhaft sein.

Der Stellmotor ist an einen Regelkreis angeschlossen, der z. B. das Gas/Luftverhältnis bei einer Verbrennung regelt. Es kommen Dreipunktregelungen ebenso wie Proportionalregelungen in Betracht.

Das Gassicherheitsabsperrventil ist als Einsitzventil oder als Doppelsitzventil ausführbar. Bei einer Doppelsitzausführung weist das Stellglied zwei in einem festen Abstand übereinander angeordnete Ventilkörper auf, denen jeweils ein Ventilsitz zugeordnet ist.

Im Folgenden wird die Erfindung anhand einer lediglich ein Ausführungsbeispiel darstellenden Zeichnung erläutert. Es zeigen schematisch
- **Fig. 1**: einen Längsschnitt durch ein erfindungsgemäßes Gassicherheitsabsperrventil,
- **Fig. 2 und 3**: weitere Ausgestaltungen des in Fig. 1 dargestellten Gegenstandes.

Das in den Figuren dargestellte Gassicherheitsabsperrventil besteht in seinem grundsätzlichen Aufbau aus einem Gehäuse 1, das eine Durchlassöffnung mit mindestens einem Ventilsitz 2 aufweist, einem Stellglied 3 mit Hubanker 4 und mindestens einem Ventilkörper 5, einem Stellantrieb 6 und einem verstellbaren Anschlagelement 7 zur Begrenzung einer Hubbewegung des Stellgliedes 3 in Öffnungsrichtung. Der Stellantrieb 6 weist eine dem Hubanker 4 zugeordnete stromdurchflossene Spule 8 und eine auf das Stellglied 3 in Schließrichtung wirkende Rückstellfeder 9 auf. Der Stellantrieb 6 umfasst ferner einen Stellmotor 10, der an einen den Gasdurchsatz steuernden Regelkreis anschließbar ist und einer stufenlosen oder in diskreten Schritten erfolgenden Verstellung des Anschlagelementes 7 dient. Der Stellmotor 10 ist unter Zwischenschaltung einer Dichtung 11 auf einen in der Spule 8 angeordneten Spulenkern 12 aufgesetzt.

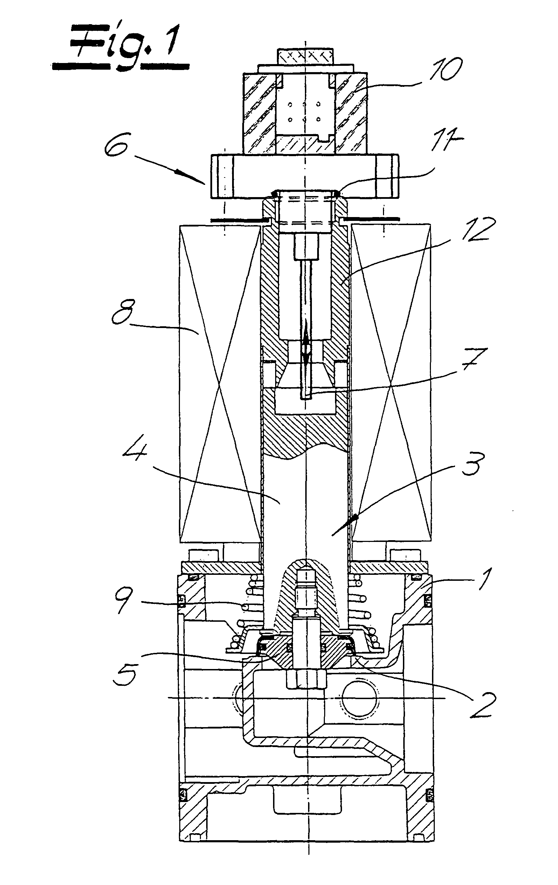

Bei der in Fig. 1 dargestellten Ausführung weist der Stellmotor 10 eine axial bewegliche Motorspindel auf, die das Anschlagelement 7 bildet. Die Verstellmöglichkeit ist durch einen Richtungspfeil angedeutet.

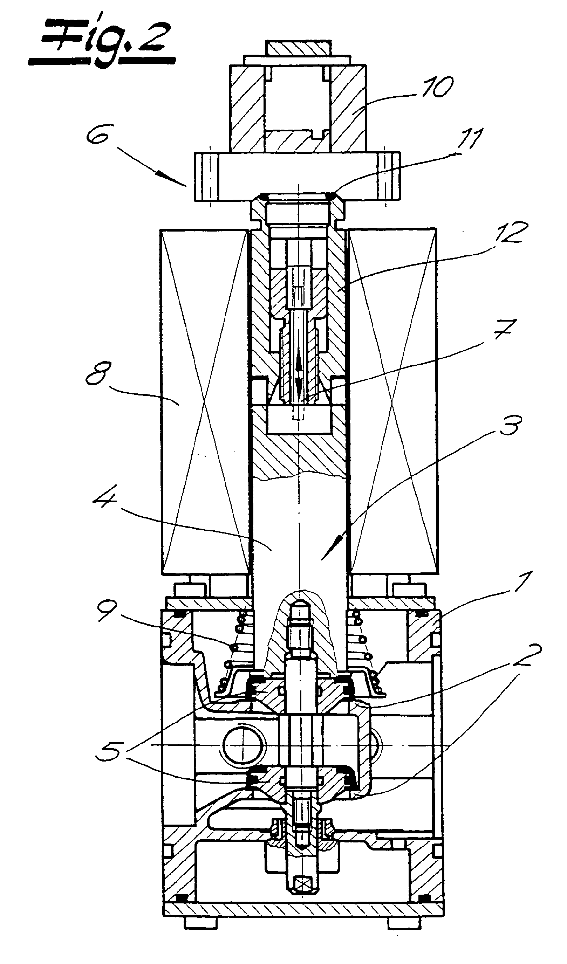

Bei der in Fig. 2 dargestellten Ausführung besteht das Anschlagelement 7 aus einer in eine Gewindebohrung des Spulenkerns 12 eingesetzten und von dem Stellmotor 10 angetriebenen Gewindespindel, die axial beweglich an den Stellmotor 10 angekuppelt ist. Durch eine gestrichelte Linie ist die Verstellmöglichkeit des Anschlagelementes 7 angedeutet.

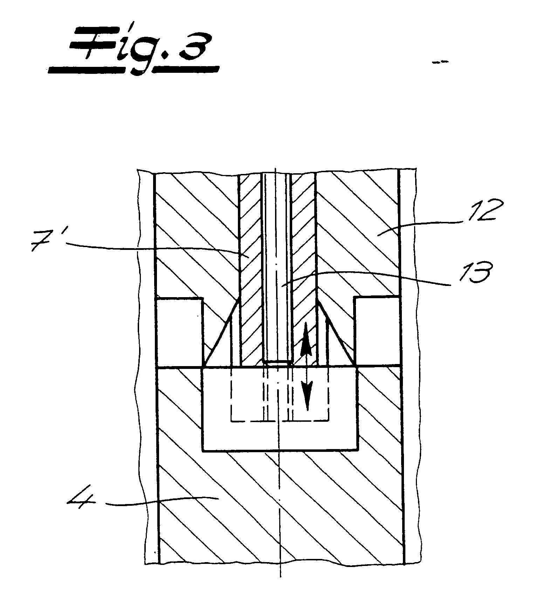

Bei der in Fig. 3 dargestellten Ausführung ist die Spindel 13 fest an den Stellmotor 10 angeschlossen. Sie durchfasst eine Gewindebohrung des Anschlagelementes 7', das drehfest und axial beweglich in den Spulenkern 12 eingesetzt ist. Die Stellbewegung des Anschlagelementes 7' ist durch eine gestrichelt dargestellte Kontur angedeutet.

Das Gassicherheitsabsperrventil kann als Einsitzventil oder Doppelsitzventil ausgebildet sein. Bei der in Fig. 1 dargestellten Ausführung ist an das Stellglied 3 lediglich ein Ventilkörper 5 angeschlossen. Das im Ausführungsbeispiel der Fig. 2 dargestellte Gassicherheitsabsperrventil ist als Doppelsitzventil ausgebildet. Das Stellglied 3 weist zwei in einem festen Abstand übereinander angeordnete Ventilkörper 5 auf, denen jeweils ein Ventilsitz 2 zugeordnet ist.

## Patentansprüche

1. Gassicherheitsabsperrventil mit
einem Gehäuse (1), das eine Durchlassöffnung mit mindestens einem Ventilsitz (2) aufweist,
einem Stellglied (3) mit Hubanker (4) und mindestens einem Ventilkörper (5),
einem Stellantrieb (6) und
einem verstellbaren Anschlagelement (7, 7') zur Begrenzung einer Hubbewegung des Stellgliedes (3) in Öffnungsrichtung,
wobei der Stellantrieb (6) eine dem Hubanker (4) zugeordnete stromdurchflossene Spule (8), eine auf das Stellglied (3) in Schließrichtung wirkende Rückstellfeder (9) sowie einen Stellmotor (10) zur stufenlosen oder in diskreten Schritten erfolgenden Verstellung des Anschlagelementes aufweist, der an einen den Gasdurchsatz steuernden Regelkreis anschließbar ist, **dadurch gekennzeichnet, dass** der Stellmotor (10) unter Zwischenschaltung einer Dichtung (11) auf den Spulenkern (12) aufgesetzt ist.

2. Gassicherheitsabsperrventil nach Anspruch 1, **dadurch gekennzeichnet, dass** der Stellmotor (10) eine axial bewegliche Motorspindel aufweist, die das Anschlagelement (7) bildet.

3. Gassicherheitsabsperrventil nach Anspruch 1, **dadurch gekennzeichnet, dass** die Spule (8) einen Spulenkern (12) mit einer Gewindebohrung aufweist und dass das Anschlagelement (7) aus einer in die Gewindebohrung eingesetzten und von dem Stellmotor (10) angetriebenen Gewindespindel besteht, die axial beweglich an den Stellmotor (10) angekuppelt ist.

4. Gassicherheitsabsperrventil nach Anspruch 1, **dadurch gekennzeichnet, dass** die Spule (8) einen Spulenkern (12) aufweist, in den ein Anschlagelement (7') drehfest und axial beweglich eingesetzt ist, und dass das Anschlagelement (7') eine Gewindebohrung aufweist, die von einer an den Stellmotor (10) angeschlossenen Spindel (13) durchfasst ist.

5. Gassicherheitsabsperrventil nach einem der Ansprüche 1 bis 4, **dadurch gekennzeichnet, dass** der Stellantrieb (6) einen Messwertaufnehmer zur Ermittlung der Position des Anschlagelementes (7, 7') aufweist.

6. Gassicherheitsabsperrventil nach einem der Ansprüche 1 bis 5, **dadurch gekennzeichnet, dass** der Stellmotor (10) aus einem Schrittmotor besteht.

7. Gassicherheitsabsperrventil nach einem der Ansprüche 1 bis 6, **dadurch gekennzeichnet, dass** das Stellglied (3) zwei in einem festen Abstand übereinander angeordnete Ventilkörper (5) aufweist, denen jeweils ein Ventilsitz (2) zugeordnet ist.

## Claims

1. Gas safety shutoff valve with
a housing (1) that has a flow passage with at least one valve seat (2),
a control element (3) with lifting armature (4) and at least one valve body (5),
a valve operator (6) and
an adjustable stop element (7, 7') to limit a lifting motion of the control element (3) in the direction of opening,
wherein the valve operator (6) has a coil (8) through which the gas flows and which is attached to the lifting armature (4), a return spring (9) acting on the control element (3) in the direction of closure, and an actuator (10) for adjusting the stop element steplessly or in discrete steps, which can be connected to a regulatory circuit that controls the gas flow,
**characterised in that**
the actuator (10) is located on top of the coil core (12) with a gasket (11) located therebetween.

2. The gas safety shutoff valve as recited in claim 1,
**characterised in that**
the actuator (10) has an axially movable motor spindle that forms the stop element (7).

3. The gas safety shutoff valve as recited in claim 1,
**characterised in that**
the coil (8) has a coil core (12) with a threaded bore, and that the stop element (7) consists of a threaded spindle that is inserted in the threaded bore and coupled to the actuator (10) so as to be axially movable by the actuator (10).

4. The gas safety shutoff valve as recited in claim 1,
**characterised in that**
the coil (8) has a coil core (12) in which a stop element (7') is inserted so as to be radially fixed and axially movable, and that the stop element (7') has a threaded bore through which a spindle (13) connected to the actuator (10) passes in engaging manner.

5. The gas safety shutoff valve as recited in any of claims 1 to 4,
**characterised in that**
the valve operator (6) has a measurement recorder for determining the position of the stop element (7, 7').

6. The gas safety shutoff valve as recited in any of claims 1 to 5,
**characterised in that**
the actuator (10) consists of a stepper motor.

7. The gas safety shutoff valve as recited in any of claims 1 to 6,
**characterised in that**
the control element (3) has two valve bodies (5) that are arranged at a fixed distance one above the other, and to each of which a valve seat (2) is attached.

## Revendications

1. Soupape d'arrêt de gaz de sécurité avec
un corps (1) muni d'une ouverture de passage avec au moins un siège de soupape (2),
un organe de commande (3) avec un induit de levage (4) et au moins un corps de soupape (5),
un actionnement de commande (6) et
un élément butée (7, 7') réglable pour la délimitation d'un mouvement de levage de l'organe de commande (3) dans le sens de l'ouverture,
l'actionnement de commande (6) étant muni d'une bobine (8) traversée par un courant et coopérant avec l'induit de levage (4), d'un ressort de rappel (9) agissant sur l'organe de commande (3) dans le sens de la fermeture, ainsi que d'un moteur de réglage (10) pour le réglage, s'effectuant en continu ou par pas discrets, de l'élément butée et pouvant être raccordé à un circuit de régulation commandant le débit de gaz, **caractérisée en ce que** le moteur de réglage (10) est monté sur le noyau (12) de la bobine avec interposition d'un joint d'étanchéité (11).

2. Soupape d'arrêt de gaz de sécurité selon la revendication 1, **caractérisée en ce que** le moteur de réglage (10) est muni d'un arbre moteur mobile axialement, qui constitue l'élément butée (7).

3. Soupape d'arrêt de gaz de sécurité selon la revendication 1, **caractérisée en ce que** la bobine (8) est munie d'un noyau de bobine (12) avec un taraudage et **en ce que** l'élément butée (7) est constitué d'une tige filetée introduite dans le taraudage et actionnée par le moteur de réglage (10), et qui est couplée au moteur de réglage (10) de manière mobile dans la direction axiale.

4. Soupape d'arrêt de gaz de sécurité selon la revendication 1, **caractérisée en ce que** la bobine (8) est munie d'un noyau de bobine (12) dans lequel un élément butée (7') est inséré de manière fixe en rotation et mobile dans la direction axiale, et **en ce que** l'élément butée (7') est muni d'un taraudage traversé par une tige (13) reliée au moteur de réglage (10).

5. Soupape d'arrêt de gaz de sécurité selon l'une des revendications 1 à 4, **caractérisée en ce que** l'actionnement de commande (6) est muni d'un transducteur pour la détermination de la position de l'élément butée (7, 7').

6. Soupape d'arrêt de gaz de sécurité selon l'une des revendications 1 à 5, **caractérisée en ce que** le moteur de réglage (10) est constitué par un moteur pas à pas.

7. Soupape d'arrêt de gaz de sécurité selon l'une des revendications 1 à 6, **caractérisée en ce que** l'organe de commande (3) possède deux corps de soupape (5) disposés à une distance fixe l'un au-dessus de l'autre, un siège de soupape (2) étant affecté à chacun d'eux.
